# FASCICULE DE BREVET EUROPEEN

(11) **EP 3 578 459 B1**
(45) Date de publication et mention de la délivrance du brevet: **02.06.2021**
(21) Numéro de dépôt: 19169672.3
(22) Date de dépôt: 16.04.2019
(51) Int. Cl.: B64C 25/00, B64C 25/40, B64C 25/50, F16H 1/06, F16D 41/16

(54) **ATTERRISSEUR D'AERONEF A PARTIE INFERIEURE ORIENTABLE ET DISPOSITIF D'ORIENTATION SIMPLIFIE**
FAHRWERK EINES LUFTFAHRZEUGS MIT AUSRICHTBAREM UNTEREN TEIL, UND VEREINFACHTE AUSRICHTVORRICHTUNG
AIRCRAFT LANDING GEAR WITH ADJUSTABLE LOWER PORTION AND SIMPLIFIED DIRECTING DEVICE

(30) Priorité: 18.04.2018 FR 1853399
(43) Date de publication de la demande: 11.12.2019
(73) Titulaire: Safran Landing Systems, 78140 Vélizy-Villacoublay (FR)
(72) Inventeur: DUBACHER, Bertrand, 77550 MOISSY-CRAMAYEL (FR); EUZET, Bertrand, 77550 MOISSY-CRAMAYEL (FR); QUENERCH'DU, Marc, 77550 MOISSY-CRAMAYEL (FR)
(74) Mandataire: Lavialle, Bruno François Stéphane

(56) Documents cités:
- EP-A1- 1 845 016
- WO-A1-2013/072286

## Description

L'invention concerne un atterrisseur d'aéronef comportant une partie inférieure orientable portant une ou des roues et équipé d'un dispositif d'orientation adapté à faire tourner la partie inférieure orientable en réponse à un ordre d'orientation.

### ARRIERE PLAN DE L'INVENTION

Les atterrisseurs auxiliaires d'aéronef d'une certaine taille sont en général équipés d'un dispositif d'orientation des roues pour faciliter le déplacement de l'aéronef au sol et lui permettre d'effectuer des virages. La fonction d'orientation est très utile pour la manœuvre de l'aéronef, mais n'est pas considérée comme critique, puisque sa perte peut, au moins momentanément, être supplée par l'application de freinage différentiel pour diriger l'aéronef. Il convient cependant que, même en cas de perte de la fonction d'orientation, les roues ne soient pas bloquées en position et puissent librement s'orienter. Enfin, il convient que le dispositif d'orientation soit compatible avec le remorquage de l'aéronef au moyen d'une barre de remorquage attelée à la partie inférieure orientable de l'atterrisseur.

Pour répondre à ces contraintes, on a proposé dans le document EP1845016 un atterrisseur à partie inférieure orientable dont le dispositif d'orientation comprend une pluralité d'actionneurs électromécaniques d'orientation comportant chacun un moteur électrique d'orientation et disposés sur l'atterrisseur pour coopérer tous simultanément avec la partie inférieure orientable en vue d'en provoquer son orientation, chacun des actionneurs électromécaniques d'orientation incluant des moyens d'accouplement commandables pour placer sélectivement l'actionneur soit dans un état accouplé avec la partie inférieure orientable dans lequel le moteur électrique de l'actionneur est apte à faire tourner la partie inférieure orientable, soit dans un état désaccouplé avec la partie inférieure orientable dans lequel le moteur électrique de l'actionneur est isolé de la partie inférieure orientable.

L'utilisation d'un tel dispositif d'orientation présente plusieurs avantages:
- en fonctionnement normal, les actionneurs électromécaniques d'orientation travaillent en parallèle conférant à la commande d'orientation une rapidité de réaction appréciable;
- si l'un des actionneurs électromécaniques d'orientation tombe en panne, celui-ci peut être désaccouplé, ce qui permet d'éviter un blocage de la partie inférieure orientable de l'atterrisseur en cas de blocage en rotation de l'actionneur électromécanique d'orientation défaillant. Dès lors, et à condition que chacun des actionneurs électromécaniques d'orientation ait une puissance suffisante pour assurer seul la commande d'orientation, l'orientation peut encore être assurée au moyen de l'actionneur électromécanique d'orientation valide, au prix bien sûr de performances d'orientation moindres.

La possibilité de désaccouplement permet l'utilisation de forts rapports de réduction qui présentent l'avantage d'utiliser des moteurs plus petits mais rendent les actionneurs irréversibles. L'irréversibilité, qui risque de bloquer toute la commande d'orientation en cas de défaillance de l'un des actionneurs, est ici neutralisée par la possibilité de désaccouplement. Il convient dès lors de prévoir une possibilité de commande du désaccouplement par le personnel au sol afin que celui-ci puisse effectuer le remorquage de l'aéronef sans endommager les actionneurs électromécaniques d'orientation.

Un tel dispositif d'orientation, s'il est adapté à des aéronefs commerciaux de taille certaine tels que l'A320 ou le B737, se révèle néanmoins complexe et onéreux, notamment pour des aéronefs plus petits tels que des avions d'affaire.

### OBJET DE L'INVENTION

L'invention vise à proposer un atterrisseur équipé d'un dispositif d'orientation simplifié, mais répondant néanmoins aux critères opérationnels précités.

### PRESENTATION DE L'INVENTION

En vue de la réalisation de ce but, on propose un atterrisseur d'aéronef comportant une partie inférieure orientable portant une ou des roues et équipé d'un dispositif d'orientation adapté à faire tourner la partie inférieure orientable en réponse à un ordre d'orientation selon la revendication 1. Selon l'invention, le dispositif d'orientation comprend un unique actionneur électromécanique d'orientation comportant un moteur électrique entraînant un pignon de sortie coaxial par l'intermédiaire d'un réducteur de type à cloche déformable (ou « harmonic drive »), le pignon de sortie coopérant avec une couronne dentée solidaire de la partie inférieur orientable, la liaison entre le moteur électrique et la partie inférieure orientable étant réversible, et l'actionneur étant équipé de moyens de surveillance d'au moins un paramètre de fonctionnement du dispositif d'orientation adaptés à détecter une baisse de performance de l'actionneur.

L'unique actionneur d'orientation ne comporte plus de moyens d'accouplement/désaccouplement, de sorte qu'il est bien plus simple que les actionneurs d'orientation de l'art antérieur précité. Il reste donc en permanence connecté à la partie inférieure orientable de l'atterrisseur, ce qui ne gêne pas sa libre rotation lors d'un remorquage ou en cas de défaut du moteur car la liaison entre le moteur électrique et la partie inférieure orientable est réversible, même si le moteur n'est pas alimenté ou est défaillant. La chaîne cinématique entre le pignon de sortie et le moteur est réduite à sa plus simple expression et le réducteur utilisé est très peu susceptible de blocage, de sorte que les risques d'un blocage de l'actionneur sont minimisés par construction. Cependant, et pour prévenir encore plus ce risque, les moyens de surveillance permettent d'anticiper une possible panne de l'actionneur et de le remplacer avant que cette panne n'ait lieu, rendant l'occurrence d'un blocage extrêmement improbable.

Ces options technologiques permettent d'assurer la fonction d'orientation avec un seul actionneur, très simple, tout en remplissant les critères fonctionnels attendus.

### DESCRIPTION DES FIGURES

L'invention sera mieux comprise à la lumière de la description qui suit d'un mode particulier de réalisation de l'invention, en référence aux figures des dessins annexés, parmi lesquelles :
la figure 1 est une vue schématique du bas d'un atterrisseur équipé d'un dispositif d'orientation à un seul actionneur électromécanique d'orientation selon l'invention ;
la figure 2 est une vue de dessus de l'atterrisseur de la figure 1 ;
la figure 3 est une vue en coupe de l'actionneur électromécanique d'orientation selon la ligne III-III de la figure 2.

### DESCRIPTION DETAILLEE DE L'INVENTION

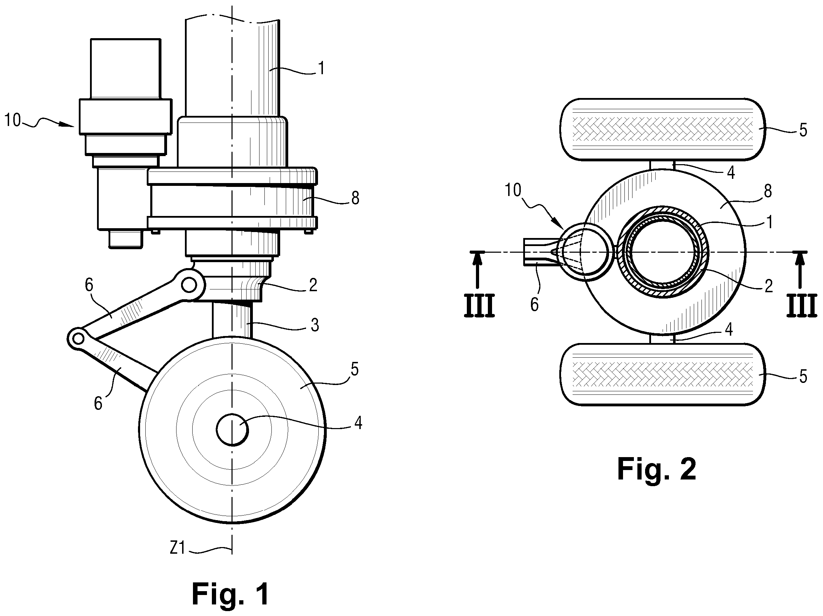

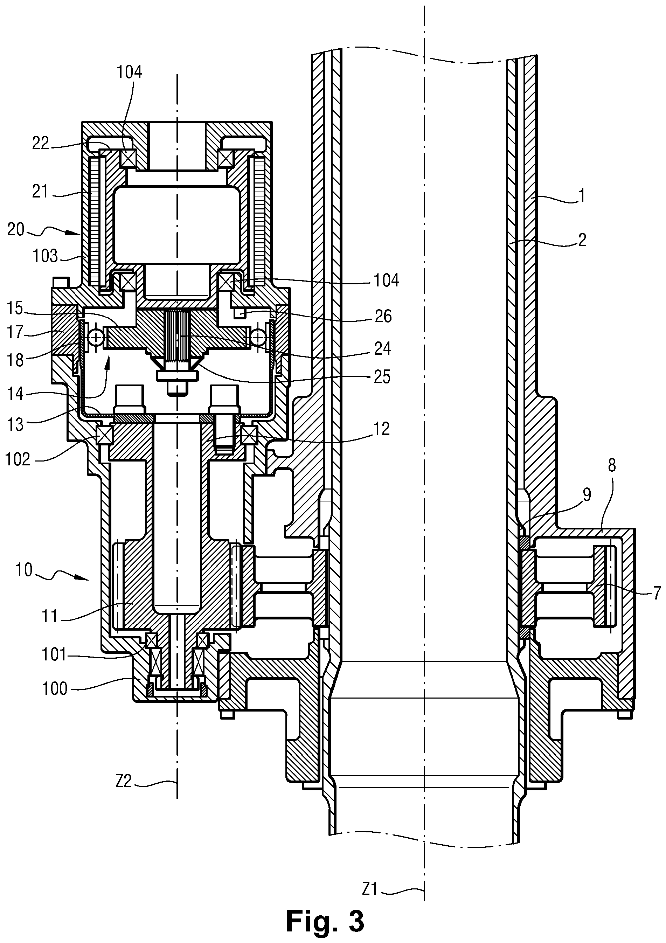

En référence aux figures 1 et 2, et conformément à un mode particulier de réalisation de l'invention, l'atterrisseur illustré comporte un caisson 1 dans lequel un tube tournant 2 est monté pour tourner selon un axe longitudinal Z1. Un amortisseur télescopique 3 s'étend intérieurement au tube tournant 2. La partie inférieure de l'amortisseur s'étend en saillie du tube 2 et porte un essieu 4 recevant des roues 5. Un compas 6 s'étend entre le tube tournant 2 et l'amortisseur 3 pour lier en rotation le tube tournant 2 et l'amortisseur 3, tout en permettant à l'amortisseur de s'enfoncer librement dans le caisson 1 selon l'axe Z1. Le tube tournant 2 porte à son extrémité inférieure une roue dentée 7 (visible à la figure 3) qui est logée dans un logement 8 du caisson 1 et qui est rendue solidaire en rotation du tube tournant 2 par des cannelures 9.

Selon l'invention, l'atterrisseur est équipé d'un dispositif d'orientation comportant un unique actionneur électromécanique d'orientation 10 adapté à coopérer avec la roue dentée 7 pour faire tourner le tube 2, et donc les roues 5 par l'intermédiaire des compas 6. Ici, l'actionneur électromécanique 10 forme un module unitaire et est rapporté sur le logement 8 du caisson 1 de façon à pouvoir en être facilement démonté.

En référence à la figure 3, la roue dentée 7 est attaquée par un pignon de sortie 11 de l'actionneur électromécanique 10 qui est monté pour tourner sur celui-ci selon un axe Z2 parallèle à l'axe Z1 de l'atterrisseur. Le pignon 11 est ici venu de matière avec un entraîneur 12 monté tournant sur un carter 100 de l'actionneur 10 au moyen de roulements 101, 102. L'entraîneur 12 est solidaire de l'organe de sortie 13 d'un réducteur 14 du type « harmonie drive » illustré notamment dans le document US2906143. L'organe de sortie 13 comporte une paroi circulaire en cloche déformable 18 portant sur sa face externe des dents qui coopèrent avec des dents en regard d'une couronne 17 solidaire du carter 100, en nombre légèrement plus important. La coopération des dents de l'organe de sortie 13 et de la couronne 17 est assurée par déformation de la paroi circulaire 18 provoquée par un organe d'entrée 15 du réducteur (connu sous le nom de « wave generator »), forçant la coopération des dents en deux portions diamétralement opposées. On remarquera que la couronne 17 forme ici une partie du carter de l'actionneur électromécanique d'orientation.

L'organe d'entrée 15 du réducteur 14 est entraîné en rotation par un moteur électrique 20 comportant un stator 21 porté par une partie 103 du carter 100 solidarisée à la couronne 17, et un rotor 22 monté tournant sur la partie de carter 103 au moyen de roulements 104. Le rotor 22 comporte un arbre de sortie 24 cannelé engagé dans un orifice cannelé conforme de l'organe d'entrée 15 pour son entraînement en rotation. Une rotation commandée du rotor 22 provoque la rotation du pignon 11 via le réducteur 14 et, partant provoque la rotation de la roue dentée 7 et donc une orientation des roues 5.

A titre d'illustration, le rapport de réduction entre le pignon 11 et la couronnée dentée 7 est de l'ordre de 5, tandis que le rapport de réduction du réducteur 14 est de l'ordre de 100, induisant un rapport de réduction total de l'ordre de 500. Cependant, et selon un aspect essentiel de l'invention, cette liaison est réversible. Pour ce faire, il convient de veiller à ce que le couple résiduel du moteur électrique 20 soit particulièrement bas, et à minimiser tous les frottements internes de l'actionneur 10. La réversibilité permet la libre orientation de la partie inférieure de l'atterrisseur sous l'action d'une barre de remorquage, sans avoir à déconnecter le dispositif d'orientation. Elle permet également la libre orientation de la partie inférieure de l'atterrisseur lorsque le moteur de l'actionneur est défaillant ou n'est plus alimenté, le pilote pouvant encore diriger l'aéronef au sol par freinage différentiel.

La structure de l'actionneur selon l'invention est particulièrement simple mécaniquement et très peu susceptible de blocage. Cependant, pour garantir un taux d'occurrence de blocage très faible, et selon un autre aspect essentiel de l'invention, l'actionneur électromécanique 10 est équipé de moyens de surveillance d'au moins un paramètre de fonctionnement du dispositif d'orientation adaptés à détecter une baisse de performance de l'actionneur. Ces moyens de surveillance permettent d'anticiper une possible défaillance de l'actionneur, pour permettre son remplacement préventif, ce qui diminue drastiquement tout risque de blocage de l'actionneur et donc le blocage de la partie inférieure. Ces moyens de surveillance comprennent des moyens de mesure d'un couple transmis par le réducteur 14 et des moyens de génération d'une alerte en réponse à la détection d'une augmentation dudit couple pour une consigne d'orientation donnée au-delà d'un seuil donné. Comme cela est visible à la figure 3, l'organe d'entrée 15 est monté coulissant sur l'arbre de sortie 24 cannelé du moteur 20 à l'encontre d'une rondelle ressort 25 qui rappelle l'organe d'entrée vers le rotor 22. On sait en effet que la transmission d'un couple par le réducteur 14 génère sur l'organe d'entrée 15 un effort axial proportionnel à ce couple, de sorte que l'organe d'entrée 15 se déplace axialement à l'encontre de l'effort de rappel de la rondelle ressort 25. Un capteur de déplacement axial 26, par exemple un capteur à courants de Foucault s'étendant en regard de l'organe d'entrée 15 et permet de mesurer le déplacement axial de l'organe d'entrée 15, et donc d'en déduire le couple transmis par le réducteur 14. Le capteur 26 est associé à des moyens de calcul aptes à estimer le couple transmis à partir de la mesure du déplacement axial de l'organe d'entrée 15 et de générer une alerte en réponse à la détection d'une augmentation dudit couple au-delà d'un seuil donné, ce qui est un signe de baisse de performance de l'actionneur électromécanique 10. L'alerte est donnée suffisamment tôt pour que les équipes de maintenance aient le temps matériel de procéder au remplacement de l'actionneur électromécanique 10 avant que celui-ci ne défaille.

L'invention n'est pas limitée à ce qui vient d'être décrit, mais englobe au contraire toute variante entrant dans le cadre défini par les revendications. En particulier, les moyens de surveillance pourront surveiller tout autre paramètre de fonctionnement du dispositif d'orientation, comme par exemple des moyens de surveillance de l'intensité du courant appelé par le moteur 20 de l'actionneur pour obtenir une orientation donnée.

## Revendications

1. Atterrisseur d'aéronef comportant une partie inférieure orientable (3,4,5) portant une ou des roues (5) et équipé d'un dispositif d'orientation adapté à faire tourner la partie inférieure orientable en réponse à un ordre d'orientation, **caractérisé en ce que** le dispositif d'orientation comprend un unique actionneur électromécanique d'orientation (10) comportant un moteur électrique d'orientation (20) entraînant un pignon de sortie (11) coaxial par l'intermédiaire d'un réducteur (14) de type à cloche déformable dit "harmonie drive" le pignon de sortie coopérant avec une roue dentée (7) solidaire de la partie inférieur orientable, la liaison entre le moteur électrique et la partie inférieure orientable étant réversible, et l'actionneur étant équipé de moyens de surveillance d'au moins un paramètre de fonctionnement du dispositif d'orientation adaptés à détecter une baisse de performance de l'actionneur.

2. Atterrisseur selon la revendication 1, dans lequel les moyens de surveillance comportent des moyens de mesure d'un couple transmis par le réducteur 14.

3. Atterrisseur selon la revendication 2, dans lequel le réducteur a un organe d'entrée (15) entraîné par un rotor (22) du moteur électrique et monté à coulissement sur ledit rotor à l'encontre d'un organe de rappel élastique (25), les moyens de mesure de couple comportant un capteur (26) adapté à mesurer un déplacement axial de l'organe d'entrée provoqué par la transmission de couple et des moyens de calcul aptes à estimer le couple transmis à partir de la mesure du déplacement axial de l'organe d'entrée (15) et de générer une alerte en réponse à la détection d'une augmentation dudit couple au-delà d'un seuil donné.

4. Atterrisseur selon la revendication 3, dans lequel le capteur (26) est du type à courants de Foucault.

## Patentansprüche

1. Luftfahrzeugfahrwerk, umfassend einen ausrichtbaren unteren Teil (3, 4, 5), der ein oder mehr Räder (5) trägt und mit einer Ausrichtungsvorrichtung ausgestattet ist, die geeignet ist, den ausrichtbaren unteren Teil in Antwort auf einen Ausrichtungsbefehl zu drehen, **dadurch gekennzeichnet, dass** die Ausrichtungsvorrichtung einen einzigen elektromechanischen Ausrichtungsaktor (10) umfasst, der einen Ausrichtungselektromotor (20) umfasst, der ein koaxiales Abtriebsritzel (11) über ein Untersetzungsgetriebe (14) vom Typ mit verformbarer Glocke, ein sogenanntes "Harmonic Drive", antreibt, wobei das Abtriebsritzel mit einem Zahnrad (7) zusammenwirkt, das fest mit dem ausrichtbaren unteren Teil verbunden ist, wobei die Verbindung zwischen dem Elektromotor und dem ausrichtbaren unteren Teil reversibel ist, und wobei der Aktor mit Überwachungsmitteln zum Überwachen mindestens eines Betriebsparameters der Ausrichtungsvorrichtung ausgestattet ist, die geeignet sind, einen Leistungsrückgang des Aktors zu erfassen.

2. Fahrwerk nach Anspruch 1, bei dem die Überwachungsmittel Messmittel zum Messen eines von dem Untersetzungsgetriebe (14) übertragenen Drehmoments umfassen.

3. Fahrwerk nach Anspruch 2, bei dem das Untersetzungsgetriebe ein Eingangselement (15) hat, das von einem Rotor (22) des Elektromotors angetrieben wird und verschiebbar auf dem Rotor entgegen einem elastischen Rückstellelement (25) gelagert ist, wobei die Drehmomentmessmittel einen Sensor (26) umfassen, der geeignet ist, eine axiale Verschiebung des Eingangselements, die von der Drehmomentübertragung verursacht wird, zu messen, sowie Rechenmittel, die geeignet sind, das übertragene Drehmoment auf der Basis der Messung der axialen Verschiebung des Eingangselements (15) zu schätzen und eine Warnung in Antwort auf die Erfassung einer Erhöhung des genannten Drehmoments über einen gegebenen Schwellenwert hinaus zu erzeugen.

4. Fahrwerk nach Anspruch 3, bei dem der Sensor (26) vom Typ mit Foucault-Strömen ist.

## Claims

1. An aircraft undercarriage including a steerable bottom portion (3, 4, 5) carrying one or more wheels (5) and fitted with a steering device adapted to turn the steerable bottom portion in response to a steering order, the undercarriage being **characterized in that** the steering device has a single electromechanical steering actuator (10) comprising a steering electric motor (20) driving a coaxial outlet pinion (11) by means of reduction gearing (14) of the deformable bell type known as a "harmonic drive", the outlet pinion co-operating with a spur gear (7) secured to the steerable bottom portion, the connection between the electric motor and the steerable bottom portion being reversible, and the actuator being fitted with monitor means for monitoring at least one operating parameter of the steering device and adapted to detect a deterioration in the performance of the actuator.

2. An undercarriage according to claim 1, wherein the monitor means comprise means for measuring torque transmitted by the reduction gearing (14).

3. An undercarriage according to claim 2, wherein the reduction gearing has an inlet member (15) driven by a rotor (22) of the electric motor and slidably mounted on said rotor against a resilient return member (25), the torque measurement means comprising a sensor (26) adapted to measure axial movement of the inlet member caused by torque being transmitted, and calculation means suitable for estimating the transmitted torque from the measured axial movement of the inlet member (15) and for generating a warning in response to detecting an increase of said torque beyond a given threshold.

4. An undercarriage according to claim 3, wherein the sensor (26) is of the eddy current type.
